# FASCICULE DE BREVET EUROPEEN

(11) **EP 0 816 665 B1**
(45) Date de publication et mention de la délivrance du brevet: **16.10.2002**
(21) Numéro de dépôt: 97401327.8
(22) Date de dépôt: 12.06.1997
(51) Int. Cl.: F02K 7/10

(54) **Mât d'injection de combustible pour statoréacteur fonctionnant à un nonbre de mach élevé**
Brennstoffeinspritzeinrichtung für ein Staustrahltriebwerk mit hoher Machzahl
Fuel injector for a ramjet working at high Mach number

(30) Priorité: 24.06.1996 FR 9607803
(43) Date de publication de la demande: 07.01.1998
(73) Titulaire: AEROSPATIALE MATRA, 75016 Paris (FR)
(72) Inventeur: Peres, Patrick, 3316 St aubin de Medoc (FR); Lansalot, Julien, 33000 Bordeaux (FR); Balemboy, Christophe, 33700 Merignac (FR)
(74) Mandataire: Bonnetat, Christian

(56) Documents cités:
- FR-A- 2 636 677
- US-A- 3 699 773
- US-A- 3 727 409

## Description

La présente invention concerne un dispositif d'injection de combustible pour un statoréacteur fonctionnant à un nombre de Mach élevé, par exemple de l'ordre de 12 à 15.

On sait que, pour la propulsion d'aéronefs hypersoniques (missiles, engins, avions, etc ...), les statoréacteurs sont particulièrement avantageux, car ils permettent de fonctionner dans une large plage de nombre de Mach, par exemple de 2 à 15, et ils présentent une faible consommation spécifique de combustible. En fonction de l'application particulière à un aéronef, et éventuellement de la phase de vol de ce dernier, le combustible utilisé peut être un hydrocarbure liquide, tel que le kérosène par exemple, ou un gaz, tel que l'hydrogène ou le méthane par exemple.

On sait de plus qu'un statoréacteur comporte, d'une part, au moins une entrée de comburant, constituée le plus généralement par une manche à air ou une prise d'air, dirigeant une veine de comburant (c'est-à-dire de l'air) vers une chambre de combustion et, d'autre part, au moins un dispositif d'injection permettant d'injecter le combustible dans ladite veine de comburant, de façon à obtenir un flux de mélange comburant-combustible qui est allumé dans ladite chambre de combustion.

Dans les statoréacteurs prévus pour des fonctionnements à un nombre de Mach peu élevé (par exemple jusqu'à Mach 2), un tel dispositif d'injection de combustible peut être constitué par un ensemble d'injecteurs élémentaires, disposés sur la paroi interne du statoréacteur, à la périphérie de la veine de comburant.

Cependant, pour des fonctionnements à des nombres de Mach élevés, quand la combustion dans le statoréacteur se fait dans une veine supersonique ou hypersonique, l'injection de combustible ne peut plus être faite uniquement à la paroi interne du statoréacteur. En effet, dans ce cas, la pénétration des jets de combustible dans la veine de comburant est trop faible pour que l'on puisse obtenir un bon mélange du comburant et du combustible à l'intérieur de ladite veine, de sorte que la combustion est mauvaise, ou même impossible. Bien entendu, un tel inconvénient est d'autant plus important que les dimensions transversales de la veine de comburant sont plus grandes.

Aussi, pour y remédier, on a déjà prévu des dispositifs d'injection en forme de rampes, pourvus d'une pluralité d'injecteurs élémentaires répartis sur leur longueur, que l'on dispose dans ladite veine de comburant, transversalement à celle-ci, en solidarisant les extrémités desdites rampes à des parois opposées dudit statoréacteur. Un tel dispositif d'injection est généralement désigné par le terme "mât d'injection" et il est utilisé soit isolément, soit en combinaison avec une injection de combustible en paroi. Un tel dispositif d'injection est divulgué dans le document FR-A-2 636 677.

Grâce aux mâts d'injection, on peut ainsi obtenir un mélange comburant-combustible satisfaisant à travers toute la section de la veine de comburant. Plus généralement, les mâts d'injection implantés dans un statoréacteur hypersonique permettent :
- d'assurer une alimentation de combustible dans toute la veine de comburant, malgré la faible pénétration des jets de combustible dans une veine de comburant à vitesse hypersonique ;
- d'augmenter la proportion de combustible dans le mélange comburant-combustible ;
- d'aider à l'allumage du mélange comburant-combustible et à stabiliser la flamme ;
- de participer à la compression de la veine de comburant, en ralentissant l'écoulement de comburant capté par le statoréacteur.

De tels mâts d'injection, qui sont soumis à l'action de la veine de comburant, se comportent donc chacun, du point de vue aérodynamique, comme une aile encastrée à ses extrémités dans deux parois opposées du statoréacteur. De plus, du côté de leur étrave qui reçoit la veine de comburant, lesdits mâts d'injection doivent présenter un bord d'attaque de faible rayon pour limiter les pertes de pression, qui limiteraient les performances propulsives du statoréacteur et pourraient même conduire à un blocage de la veine de comburant, qui ne peut rester hypersonique dans la chambre de combustion que si la vitesse du comburant en amont est suffisamment élevée.

Cependant, l'échauffement de ladite étrave, engendré par la veine de comburant hypersonique, est sensiblement inversement proportionnel à la racine carrée du rayon du bord d'attaque de ladite étrave. Par suite, une étrave de faible rayon de bord d'attaque est soumise à des échauffements très importants. On remarquera de plus que, lesdits mâts d'injection étant disposés à l'intérieur du statoréacteur, il est impossible d'en assurer le refroidissement par rayonnement avec l'air dans lequel vole l'aéronef propulsé par ledit statoréacteur. Une telle étrave est donc soumise à des températures très élevées, de l'ordre de 5000K par un aéronef volant à Mach 12 à une altitude de l'ordre de 30 km. Il est donc nécessaire de construire les mâts d'injection dans des matières, telles que les céramiques, le rayon dudit bord d'attaque étant de l'ordre de 3 à 5 mm. Cependant, compte-tenu des procédés actuels de réalisation de pièces de céramique, on conçoit aisément que la fabrication de mâts d'injection en matière céramique, devant satisfaire à une grande précision, est obligatoirement longue et coûteuse.

La présente invention a pour objet de remédier à ces inconvénients. Elle concerne un mât d'injection pour statoréacteur hypersonique, qui, à la fois, présente un bord d'attaque de faible rayon et peut être réalisé en une matière composite carbone-carbone.

A cette fin, selon l'invention, le mât d'injection de combustible pour un statoréacteur destiné à fonctionner à un nombre de Mach élevé et comportant une chambre de combustion dans laquelle est introduite une veine de comburant, ledit mât comportant une étrave recevant ladite veine de comburant et formant une rampe d'injecteurs élémentaires de combustible, disposée dans ladite veine de comburant transversalement à celle-ci et répartissant ledit combustible dans ladite veine de comburant, est remarquable :
- en ce qu'il comporte :
   . un corps de composite carbone-carbone, dans lequel est agencée ladite rampe d'injecteurs élémentaires, et qui, au moins du côté de ladite étrave, présente une section en forme de coin dont l'angle est au plus égal à 15° et dont l'arête est coupée sur au moins une partie de sa longueur pour former au moins une facette d'extrémité ; et
   . une pièce d'étrave constituée par une peau mince de composite carbone-carbone en forme au moins approximative d'un dièdre dont l'arête présente un rayon de courbure au plus égal à 2 mm et dont l'angle est égal à celui dudit coin ;
- en ce que ladite peau est assemblée audit corps, de façon étanche, avec ses faces appliquées contre les faces dudit coin, de sorte qu'une chambre étanche est délimitée, dans la concavité de ladite peau, entre celle-ci et ladite facette d'extrémité dudit corps ; et
- en ce que, dans ledit corps, sont agencés :
   . des moyens d'injection d'un fluide de refroidissement dans ladite chambre étanche, ces moyens d'injection comportant des buses disposées dans ladite facette dudit corps pour engendrer une pluralité de jets de fluide de refroidissement sous pression répartis le long de ladite facette et frappant la face concave de ladite peau, au moins dans la région de son arête ; et
   . des moyens d'évacuation dudit fluide de refroidissement, après impact desdits jets contre la face concave de ladite peau.

Ainsi, puisque l'étrave est formée par une peau mince dont la face concave interne est refroidie efficacement par l'impact des jets de fluide de refroidissement, la face convexe externe de ladite peau, c'est-à-dire le bord d'attaque de l'étrave, est également refroidie efficacement par conduction thermique à travers l'épaisseur de ladite peau mince, de sorte que la température à laquelle est soumise ladite étrave peut être seulement de l'ordre de 1000°C à 2000°C (à comparer aux 5000K mentionnés ci-dessus), bien que ladite étrave soit effilée (angle dièdre de 15°) et présente un faible rayon de bord d'attaque (au plus égal à 2 mm). C'est grâce à ce refroidissement efficace que ledit mât peut être réalisé en composite carbone-carbone.

Pour obtenir un tel refroidissement efficace de l'étrave, on a constaté qu'il était avantageux que :
- l'épaisseur de ladite peau mince de l'étrave soit au plus égale à 2 mm ;
- le composite carbone-carbone constituant ladite peau mince ait une conductivité thermique dans l'épaisseur de l'ordre de 70 W/m/K, dans la gamme de températures d'utilisation ; et
- le fluide de refroidissement soit un gaz à basse température, par exemple de l'hydrogène à une température de l'ordre de 100K à 300K.

Bien entendu, de ce qui a été mentionné ci-dessus, on comprendra que l'épaisseur, la conductivité thermique et la nature de ladite peau mince, d'une part, et la température, la pression, le débit et la nature du fluide de refroidissement, d'autre part, constituent autant de paramètres permettant d'ajuster la température de ladite peau mince.

Par exemple, une pièce d'étrave, dont l'épaisseur est de l'ordre de 1 mm, dont la matière constitutive a une conductivité thermique transversale (parallèle à l'épaisseur) de l'ordre de 70 W/m/K et ayant un angle dièdre de 12° et un rayon de bord d'attaque de 1,5 mm, est portée à une température voisine de 1500°C pour un nombre de Mach égal à 12, si on utilise, comme gaz de refroidissement, de l'hydrogène à une température de 100K à 300K sous une pression de l'ordre de 10 à 15 bars avec un débit de l'ordre de 2 à 5 g/s pour chaque cm de longueur de bord d'attaque.

A partir d'une telle configuration, il est bien évident, par exemple, que :
- si on utilise de l'hydrogène à une température différente, on pourra, toutes choses étant égales par ailleurs, maintenir la température de la peau mince en modifiant ledit débit ;
- si la matière constitutive de la peau mince résiste à une température supérieure à 1500°C, par exemple 2000°C, cette matière constitutive peut présenter une conductivité thermique inférieure à 70 W/m/K, ou bien le refroidissement peut être moins performant ;
- etc ...

On remarquera par ailleurs que le mât d'injection conforme à la présente invention n'est pas limité aux nombres de Mach élevés, supérieurs à 10. En effet, si l'aéronef est dans une phase de vol dans laquelle le nombre de Mach est inférieur à 10, le fluide de refroidissement peut être un ergol, de pouvoir réfrigérant inférieur à celui de l'hydrogène, mais suffisant pour le refroidissement de l'étrave, au nombre de Mach considéré. Il suffit alors de concevoir l'alimentation du mât d'injection en fluide de refroidissement, pour que ledit mât reçoive, dans chaque phase de vol de l'aéronef, un fluide de refroidissement approprié. Avantageusement, le fluide de refroidissement peut être constitué par du combustible pour ledit statoréacteur. Ainsi, il n'y a pas lieu de prévoir, à bord de l'aéronef, un réservoir particulier de fluide de refroidissement, ce fluide de refroidissement étant prélevé directement sur l'alimentation en combustible. De plus, après impact du fluide de refroidissement contre la face interne concave de la peau d'étrave, lesdits moyens d'évacuation peuvent récupérer le fluide de refroidissement et le réinjecter dans la chambre de combustion du statoréacteur, augmentant ainsi les performances propulsives du statoréacteur.

La récupération du fluide de refroidissement peut se faire à l'intérieur ou à l'extérieur dudit mât d'injection et le fluide de refroidissement récupéré peut être injecté dans la chambre de combustion, soit directement, soit à travers les injecteurs élémentaires de combustible dudit mât. Eventuellement, entre sa récupération et sa réinjection dans la chambre de combustion, ledit fluide de refroidissement peut servir à refroidir un élément dudit statoréacteur, par exemple la carène d'une prise d'air.

Bien entendu, pour une bonne récupération du fluide de refroidissement, il est nécessaire de tenir compte des différences de pression entre le combustible injecté et le combustible récupéré, celui-ci étant détendu et à une pression inférieure. On doit faire en sorte que le combustible à haute pression se jette dans le combustible récupéré à basse pression. Eventuellement, un surpresseur peut être prévu sur le circuit de combustible récupéré pour en augmenter la pression.

Dans un mode avantageux de réalisation, ladite peau de composite carbone-carbone dont est formée ladite pièce d'étrave comporte :
- une structure fibreuse tissée, dont les fils de trame sont répartis à plusieurs niveaux de l'épaisseur de ladite peau et dont chacun des fils de chaîne passe autour de fils de trame à des niveaux différents ; et
- une matrice, enrobant ladite structure fibreuse, et constituée de brai pyrolisé et graphité.

Grâce à une telle constitution, on peut atteindre la valeur de conductivité thermique mentionnée ci-dessus, tout en obtenant une peau mince et peu perméable. La structure fibreuse tissée peut être du type décrite dans le brevet français FR-A-2 610 951.

On remarquera que ladite pièce d'étrave peut être obtenue par pliage de ladite structure fibreuse autour d'une direction parallèle auxdits fils de trame (ce qui évite les éventuels endommagements de pliure), après quoi ladite structure fibreuse pliée est imprégnée de brai, puis pyrolisée et graphitée. Dans la peau rigide ainsi obtenue, l'arête de la pièce d'étrave est parallèle aux fils de trame de ladite structure fibreuse tissée.

Par ailleurs, le corps composite dudit mât peut être formé d'une structure fibreuse tridimensionnelle, également enrobée dans une matrice carbone à base de brai. Ainsi, la conductivité thermique dudit corps composite est également élevée et ledit corps est compatible avec la peau, en ce qui concerne les dilatations.

La peau et le corps dudit mât sont avantageusement solidarisés l'un de l'autre par collage carbone. Pour cela, on utilise une colle phénolique incorporant des particules de carbone, de sorte que, par pyrolyse, ladite colle se transforme en carbone. Une telle colle présente des propriétés mécaniques et chimiques compatibles avec les contraintes mécaniques et thermomécaniques et avec les traitements thermiques d'anti-oxydation (voir ci-après) auxquels est soumis ledit mât.

Eventuellement, le collage graphite de la peau sur le corps est renforcé par des moyens de fixation en carbone (clous, vis) traversant ladite peau et fixés dans le corps.

Après assemblage de la peau sur le corps, on effectue un traitement thermique de protection anti-oxydation avec un ou plusieurs dépôts de carbure de silicium. Ces dépôts sont ajustés en épaisseur et en porosité afin de ne pas abaisser sensiblement la conductivité de la peau.

Ainsi, selon l'invention, on obtient un mât d'injection homogène, tout en carbone, protégé contre l'oxydation avec une peau de faible épaisseur répondant aux besoins de conductivité, de tenue mécanique et de raideur et avec un corps à architecture à trois dimensions permettant de répondre aux besoins de conductivité et de résistance mécanique externe et interne, notamment à la pression d'injection des gaz.

Dans un mode de réalisation particulier, destiné à un aéronef devant voler à Mach 12 avec une étrave devant supporter une température voisine de 1500°C, le mât d'injection conforme à la présente invention est remarquable en ce que :
- la peau forme un angle dièdre de 12° et a un rayon de bord d'attaque égal à 1,5 mm ;
- la peau a une épaisseur de l'ordre de 1 mm et sa matière composite carbone-carbone constitutive présente une conductivité thermique transversale de l'ordre de 70 W/m/K ;
- le fluide de refroidissement est de l'hydrogène à une température de 100K à 300K sous une pression de l'ordre de 10 à 15 bars ; et
- le débit du fluide de refroidissement est de l'ordre de 2 à 5 g/s pour chaque cm de la longueur dudit bord d'attaque.

Lesdits moyens d'évacuation du fluide de refroidissement peuvent comporter :
- au moins une rainure longitudinale pratiquée superficiellement dans ledit corps et obturée par une face de ladite pièce d'étrave ; et
- un réseau de rainures transversales superficielles faisant communiquer ladite chambre étanche avec ladite rainure longitudinale et également obturées par ladite pièce d'étrave.

De même, ladite rampe d'injection de combustible et lesdits moyens d'injection de fluide de refroidissement peuvent comporter des canaux longitudinaux d'alimentation et des canaux transversaux d'injection, tous pratiqués dans ledit corps du mât.

Afin d'injecter au mieux le combustible dans la veine de comburant, il est avantageux que ladite rampe d'injection de combustible soit disposée du côté du mât opposé à l'étrave. Par ailleurs, afin d'améliorer encore l'injection de combustible dans le comburant et le mélange combustible-comburant, la rampe d'injection de combustible peut comporter des séries d'injecteurs élémentaires distinctes, les unes injectant du combustible dans la direction de la veine de comburant et les autres injectant du combustible en oblique dans ladite veine.

Dans ce cas, le corps du mât d'injection peut comporter, du côté opposé à ladite étrave, une nervure de culot longitudinale médiane saillante, au moins une série d'injecteurs élémentaires étant agencée dans ladite nervure de culot et injectant du combustible dans la direction de la veine de comburant, alors que, de part et d'autre de ladite nervure de culot, sont agencées au moins deux séries d'injecteurs élémentaires injectant du combustible en oblique dans ladite veine.

Par ailleurs, de façon usuelle, le corps du mât d'injection comporte à ses extrémités des têtes destinées à l'ancrage du mât dans des parois opposées du statoréacteur et à l'alimentation dudit mât en combustible et en fluide de refroidissement.

Dans ce cas, il est avantageux que ladite peau d'étrave recouvre au moins en partie lesdites têtes, de sorte que cette peau soit maintenue par l'ancrage dans lesdites parois du statoréacteur. On accroît ainsi la solidarisation de la pièce d'étrave et dudit corps.

Les figures du dessin annexé feront bien comprendre comment l'invention peut être réalisée. Sur ces figures, des références identiques désignent des éléments semblables.

La figure 1 est une vue très schématique en perspective d'un exemple de réalisation de statoréacteur pourvu de mâts d'injection de combustible, l'enveloppe dudit statoréacteur étant supposée transparente.

La figure 2 est une vue en perspective éclatée d'un exemple de réalisation du mât d'injection de combustible conforme à la présente invention.

La figure 3 est une coupe longitudinale médiane du mât, assemblé, de la figure 2, selon la ligne III-III de cette dernière figure.

Les figures 4, 5, 6 et 7 sont des coupes transversales dudit mât d'injection de combustible, correspondant respectivement aux lignes de coupe IV-IV, V-V, VI-VI et VII-VII de la figure 3.

La figure 8 montre, partiellement et à plus grande échelle, ladite pièce d'étrave au voisinage de son bord d'attaque pour illustrer schématiquement le tissu constituant l'armature de ladite pièce.

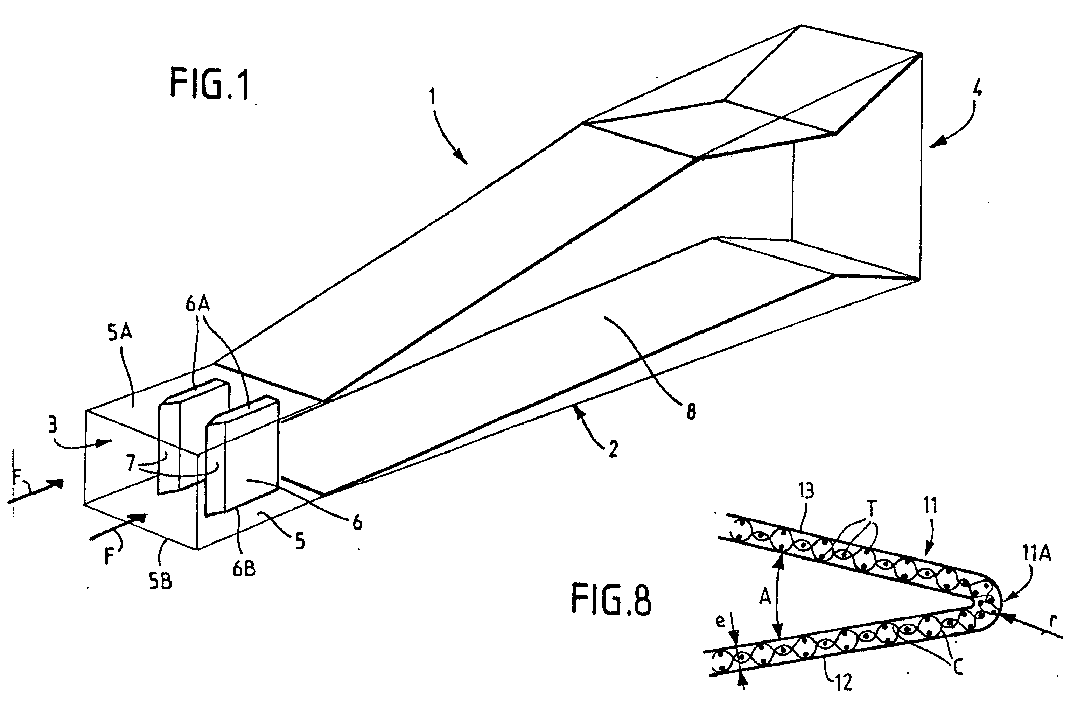

Le statoréacteur 1, montré par la figure 1, est destiné à la propulsion d'un aéronef hypersonique (non représenté) devant voler dans une large plage de nombre de Mach, par exemple d'environ Mach 6 à un nombre de Mach de l'ordre de 12 à 15.

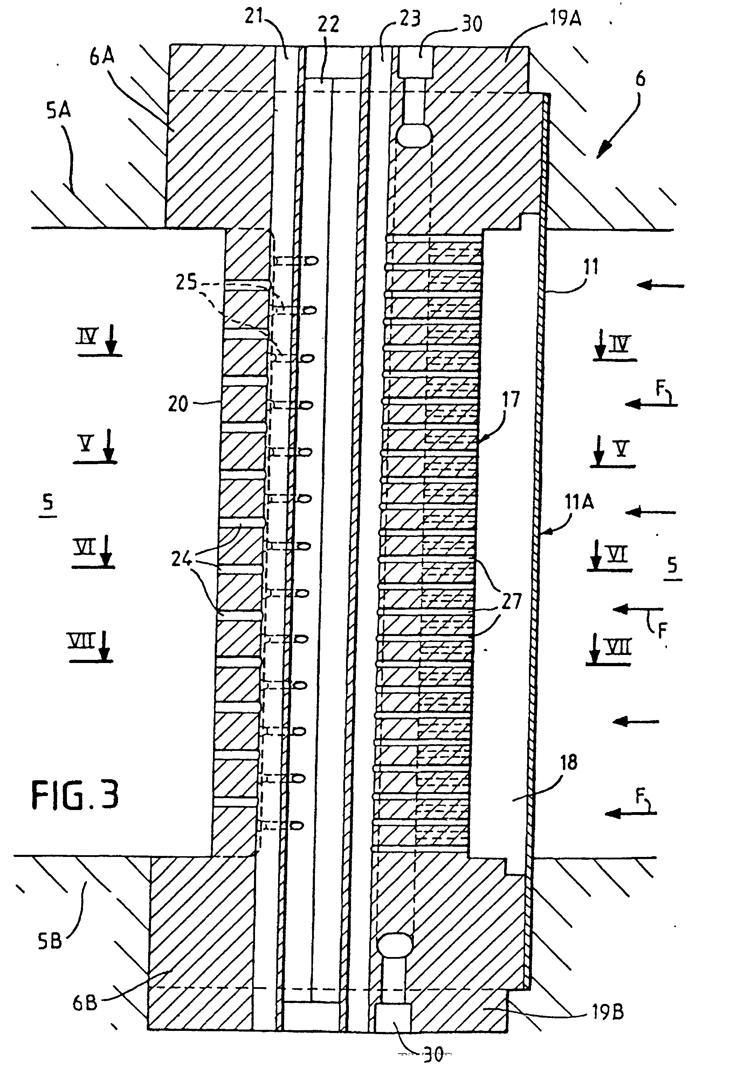

Le statoréacteur 1 comporte une enveloppe 2 pourvue, à l'une de ses extrémités, d'une prise d'air 3 pour une veine d'air devant servir de comburant (symbolisée par des flèches F) et, à son extrémité opposée, d'une tuyère 4. En aval de la prise d'air 3, l'enveloppe 2 forme une chambre d'injection 5, à l'intérieur de laquelle sont disposés deux mâts d'injection de combustible 6, transversalement à la veine de comburant F. Les mâts d'injection 6 comportent une étrave 7 recevant ladite veine de comburant et sont solidarisés de l'enveloppe 2, par leurs extrémités 6A et 6B fixées à la face interne de deux parois opposées 5A et 5B de la chambre d'injection 5. Entre la chambre d'injection 5 et la tuyère 4, l'enveloppe 2 délimite une chambre de combustion 8, à la partie amont de laquelle sont prévus des allumeurs (non représentés). A leur partie arrière (c'est-à-dire en regard de la chambre de combustion 8), lesdits mâts d'injection 6 comportent des rampes d'injection longitudinales (non visibles sur la figure 1, mais représentées sur les figures 3, 4 et 6).

Ainsi, le combustible est réparti dans toute la veine de comburant F, au niveau des mâts d'injection 6, et la combustion du flux du mélange comburant-combustible se produit dans la chambre de combustion 8, après quoi les gaz de combustion sont éjectés à travers la tuyère 4. On notera que, comme combustible, on peut utiliser du kérosène pour les nombres de Mach de vol les plus faibles (jusqu'à Mach 8) (éventuellement avec un barbotage d'hydrogène de façon à faciliter l'allumage du statoréacteur et l'éclatement du jet), puis de l'hydrogène pour les nombres de Mach plus élevés. D'autres combustibles, tels que du méthane, des hydrocarbures endothermiques, des combustibles de synthèse, peuvent également être employés pour un statoréacteur de ce type.

Dans l'exemple de réalisation particulier représenté sur la figure 1, l'enveloppe 2 du statoréacteur présente, dans son ensemble, une forme de conduite de section transversale rectangulaire ou carrée, constituée généralement de quatre parois deux à deux opposées (supposées transparentes sur cette figure 1). Il est bien entendu qu'une telle configuration n'est nullement limitative.

Comme cela a été mentionné ci-dessus, le bord d'attaque de l'étrave 7 des mâts d'injection 6 subit de très importants flux thermiques, lorsque la veine de comburant correspond à un vol hypersonique. A Mach 12, l'étrave 7 est portée à une température de l'ordre de 5000K.

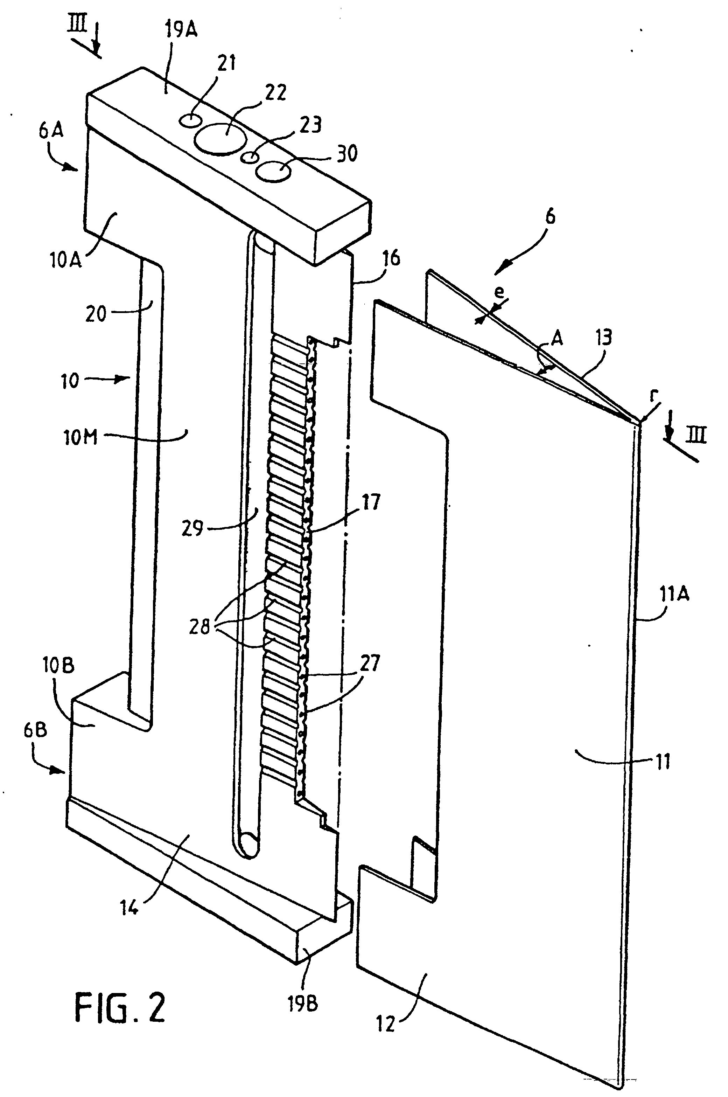

Les figures 2 à 7 illustrent un mode de réalisation pour un mât d'injection 6, conforme à l'invention et susceptible de résister à des contraintes thermiques aussi élevées.

Comme le montrent ces figures, dans ce mode de réalisation, le mât d'injection de combustible 6 comporte un corps 10, monobloc, dans lequel, comme on le verra par la suite, sont usinés des injecteurs de combustible, des moyens d'injection de fluide de refroidissement et des moyens d'évacuation de ce dernier fluide. Le corps 10 est lui-même usiné dans un bloc de matière composite carbone-carbone, dont la structure fibreuse est tridimensionnelle et dont la matrice est du brai densifié.

Le mât 6 comporte de plus une pièce d'étrave 11 en une matière dont la conductivité thermique dans l'épaisseur est de l'ordre de 70 W/m/K, en forme de dièdre, dont l'angle A est au plus égal à 15°, par exemple égal à 12°. De plus, l'épaisseur e des faces de la pièce d'étrave 11 est au plus égale à 2 mm, par exemple égale à 1,5 mm et le rayon r de l'arête 11A de la pièce 11 est au plus égal à 2 mm. La pièce 11 est destinée à former l'étrave 7 du mât 6, son arête 11A étant alors le bord d'attaque de ladite étrave.

Comme cela est illustré schématiquement sur la figure 8, la pièce d'étrave 11 est formée par une peau composite carbone-carbone dont la structure fibreuse est tissée, les fils de trame T étant répartis à plusieurs niveaux de l'épaisseur e de ladite peau et dont chacun des fils de chaîne C passe autour de fils de trame T à niveaux différents. De plus, l'arête 11A est parallèle aux fils de trame T. La matrice de la peau 11 est également du brai densifié.

Sur sa plus grande longueur, le corps 10 présente une section en forme de coin dont l'angle est égal à l'angle A de la pièce d'étrave 11.

Ainsi, comme le montrent les figures 3 à 7, les faces 12 et 13 de la pièce d'étrave 11 s'appliquent contre les faces 14 et 15 du corps 10 quand les deux pièces 10 et 11 sont assemblées de manière étanche, par exemple au moyen de colle et/ou de vis (de manière non représentée).

L'arête 16 du coin du corps 10 est échancrée et coupée dans la partie médiane 10M dudit corps pour former une facette d'extrémité 17. Ainsi, lorsque les pièces 10 et 11 sont assemblées, une chambre étanche 18 est délimitée, dans la concavité de la pièce d'étrave 11, entre la surface interne des faces 12 et 13 et la facette 17 du corps 10.

Les extrémités 6A et 6B du mât 6, destinées à être ancrées dans les deux parois opposées 5A et 5B de la chambre d'injection 5, correspondent à des parties élargies 10A et 10B, du côté opposé à l'arête 16, de la partie médiane triangulaire 10M du mât, recouvertes également par les faces 12 et 13 de la pièce d'étrave 11, ainsi qu'à des têtes d'extrémité parallélépipédiques 19A et 19B, respectivement portées par lesdites parties élargies 10A et 10B.

La partie médiane 10M du corps 10 comporte, du côté opposé à la facette 17, une nervure de culot longitudinale 20, en saillie et joignant les têtes 6A et 6B.

Longitudinalement, le corps 10 est percé de canaux 21, 22 et 23.

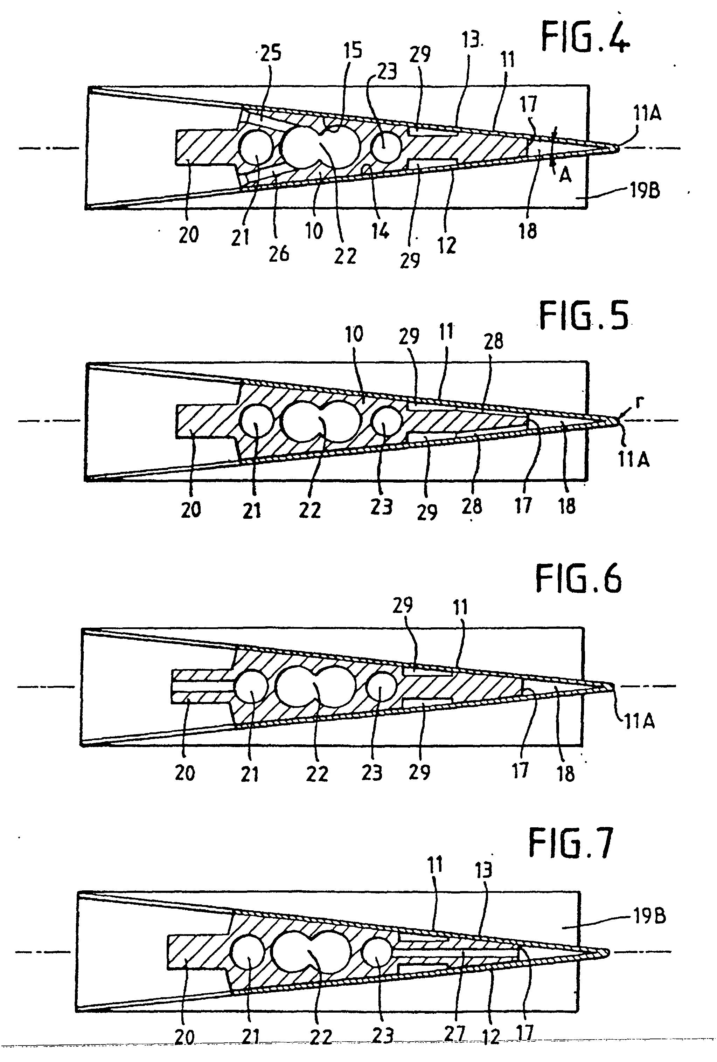

Le canal longitudinal 21 communique avec une pluralité de canaux transversaux 24, pratiqués dans la nervure 20 et répartis le long de la partie médiane 10M du corps 10 (voir les figures 3 et 6).

Le canal longitudinal 22 communique avec une pluralité de canaux transversaux 25 et 26 débouchant de part et d'autre de la nervure longitudinale 20 (voir les figures 3 et 4).

Le canal longitudinal 23 communique avec une pluralité de canaux transversaux 27 débouchant dans la facette 17 et donc dans la chambre étanche 18 (voir les figures 3 et 7).

Par ailleurs, les parois 14 et 15 de la partie médiane 10M du corps 10 comportent une pluralité de rainures superficielles transversales 28 reliant ladite facette 17 à des rainures longitudinales superficielles 29, elles-mêmes reliées à leurs extrémités à des canaux longitudinaux 30 débouchant à l'extrémité des têtes 6A et 6B. Les rainures superficielles 28 et 29 sont obturées par la pièce d'étrave 11 (voir les figures 3 et 5).

On comprendra aisément que, lorsque l'on injecte du combustible dans les canaux 21 et 22, celui-ci est injecté dans la chambre 5, en direction de la chambre de combustion 8, respectivement par les canaux transversaux 24 et 25 qui se comportent chacun comme un injecteur élémentaire. De même, lorsque l'on injecte un fluide de refroidissement dans le canal longitudinal 23, ce fluide de refroidissement est injecté dans la chambre étanche 18 par les canaux transversaux 27. Le fluide de refroidissement injecté dans la chambre 18 est récupéré par les rainures transversales 28 et conduit par celles-ci dans les rainures longitudinales 29. Il peut donc être évacué par les canaux 30.

Bien entendu, bien que sur la figure 3 on ait représenté les canaux 21, 22, 23 et 30 ouverts à leurs deux extrémités, il est possible d'obturer l'une ou l'autre desdites extrémités.

Conformément à une particularité importante de la présente invention, le fluide de refroidissement, par exemple de l'hydrogène à basse température, est à une pression telle (par exemple de l'ordre de 10 bars) que les jets de fluide de refroidissement sortant des canaux 27 traversent la chambre étanche 18 et frappent la surface interne des faces 12 et 13 de la pièce d'étrave 11, au moins au voisinage de l'arête 11A. Le débit du fluide de refroidissement doit bien entendu être suffisant, comme il a été dit ci-dessus, pour que la température de la pièce d'étrave 11, dans des conditions de vol à nombre de Mach élevé, reste comprise entre 1000°C et 2000°C. Dans le cas où le fluide de refroidissement est de l'hydrogène, un tel débit doit être de plusieurs grammes par seconde et par cm de longueur de bord d'attaque 11A.

Un tel fluide de refroidissement peut être du combustible utilisé pour alimenter la chambre de combustion 8. Dans ce cas, le fluide de refroidissement alimentant les moyens d'injection 23, 27 est dérivé du circuit alimentant la rampe d'injection 21, 22, 24, 25 et 26. De préférence, le débit de combustible utilisé comme fluide de refroidissement est inférieur à 20% du débit total de combustible injecté dans la chambre de combustion 8.

## Revendications

1. Mât (6) d'injection de combustible pour un statoréacteur (1) destiné à fonctionner à un nombre de Mach élevé et comportant une chambre de combustion (8) dans laquelle est introduite une veine de comburant (F), ledit mât comportant une étrave (7) recevant ladite veine de comburant et formant une rampe d'injecteurs élémentaires de combustible, disposée dans ladite veine de comburant transversalement à celle-ci et répartissant ledit combustible dans ladite veine de comburant,
**caractérisé :**
- **en ce qu'**il comporte :
. un corps (10) de composite carbone-carbone, dans lequel est agencée ladite rampe d'injecteurs élémentaires, et qui, au moins du côté de ladite étrave, présente une section en forme de coin dont l'angle est au plus égal à 15° et dont l'arête (16) est coupée sur au moins une partie de sa longueur pour former au moins une facette d'extrémité (17) ; et
. une pièce d'étrave (11) constituée par une peau mince de composite carbone-carbone en forme au moins approximative d'un dièdre dont l'arête (11A) présente un rayon de courbure (r) au plus égal à 2 mm et dont l'angle est égal à celui dudit coin ;
- en ce que ladite peau est assemblée audit corps, de façon étanche, avec ses faces (12, 13) appliquées contre les faces (14, 15) dudit coin, de sorte qu'une chambre étanche (18) est délimitée, dans la concavité de ladite peau, entre celle-ci et ladite facette d'extrémité (17) dudit corps ; et
- en ce que, dans ledit corps (10), sont agencés :
. des moyens (23, 27) d'injection d'un fluide de refroidissement dans ladite chambre étanche (18), ces moyens d'injection comportant des buses disposées dans ladite facette (17) dudit corps pour engendrer une pluralité de jets de fluide de refroidissement sous pression répartis le long de ladite facette et frappant la face concave de ladite peau (11), au moins dans la région de son arête (11A) ; et
. des moyens (28, 29, 30) d'évacuation dudit fluide de refroidissement, après impact desdits jets contre la face concave de ladite peau.

2. Mât d'injection selon la revendication 1,
**caractérisé en ce que** ladite peau de composite carbone-carbone dont est formée ladite pièce d'étrave comporte :
- une structure fibreuse tissée, dont les fils de trame (T) sont répartis à plusieurs niveaux de l'épaisseur (e) de ladite peau et dont chacun des fils de chaîne (C) passe autour de fils de trame (T) à des niveaux différents ; et
- une matrice, enrobant ladite structure fibreuse, et constituée de brai pyrolisé et graphité.

3. Mât d'injection selon la revendication 2,
**caractérisé en ce que** l'arête (11A) de la pièce d'étrave est parallèle aux fils de trame (T) de ladite peau.

4. Mât d'injection selon l'une des revendications 1 à 3,
**caractérisé en ce que** l'épaisseur (e) de ladite peau est au plus égale à 2 mm.

5. Mât d'injection selon l'une des revendications 1 à 4,
**caractérisé en ce que** la conductivité thermique de la matière composite carbone-carbone constitutive de ladite peau (11), transversalement à celle-ci, est de l'ordre de 70 W/m/K.

6. Mât d'injection selon l'une quelconque des revendications 1 à 5,
**caractérisé en ce que** ledit corps (10) de matière composite carbone-carbone est formé d'une structure fibreuse tridimensionnelle enrobée dans une matrice de brai pyrolisé et graphité.

7. Mât d'injection selon l'une quelconque des revendications 1 à 6,
**caractérisé en ce que** ladite peau (11) et ledit corps (10) de matière composite carbone-carbone sont assemblés par collage au moyen d'une colle carbone.

8. Mât d'injection selon la revendication 7,
**caractérisé en ce que** l'ensemble de ladite peau collée sur ledit corps est protégé contre l'oxydation.

9. Mât d'injection selon l'une des revendications 1 à 8,
**caractérisé en ce que** le fluide de refroidissement est un gaz à basse température.

10. Mât d'injection selon l'une des revendications 1 à 9, pour un aéronef devant voler à Mach 12, l'étrave dudit mât devant supporter une température voisine de 1500°C,
**caractérisé en ce que** :
- la peau (11) forme un angle dièdre (A) de 12° et a un rayon (r) de bord d'attaque égal à 1,5 mm ;
- la peau a une épaisseur (e) de l'ordre de 1 mm et sa matière composite carbone-carbone constitutive présente une conductivité thermique transversale de l'ordre de 70 W/m/K ;
- le fluide de refroidissement est de l'hydrogène à une température de 100K à 300K sous une pression de l'ordre de 10 à 15 bars ; et
- le débit du fluide de refroidissement est de l'ordre de 2 à 5 g/s pour chaque cm de la longueur dudit bord d'attaque.

11. Mât d'injection selon l'une des revendications 1 à 10,
**caractérisé en ce que** le fluide de refroidissement est constitué par du combustible.

12. Mât d'injection selon l'une des revendications 1 à 11,
**caractérisé en ce que** lesdits moyens d'évacuation du fluide de refroidissement comportent :
- au moins une rainure longitudinale (29) pratiquée superficiellement dans ledit corps (10) et obturée par une face de ladite peau (11) ; et
- un réseau de rainures transversales superficielles (28) faisant communiquer ladite chambre étanche (18) avec ladite rainure longitudinale (29) et également obturées par ladite peau.

13. Mât d'injection selon l'une des revendications 1 à 12,
**caractérisé en ce que** ladite rampe d'injection de combustible et lesdits moyens d'injection de fluide de refroidissement comportent des canaux longitudinaux d'alimentation (21, 22, 23) et des canaux transversaux d'injection (24 à 27), tous pratiqués dans ledit corps du mât.

14. Mât d'injection selon l'une des revendications 1 à 13,
**caractérisé en ce que** ladite rampe d'injection de combustible est disposée du côté dudit mât opposé à ladite étrave.

15. Mât d'injection selon la revendication 14,
**caractérisé en ce que** ladite rampe d'injection de combustible comporte des séries d'injecteurs élémentaires distinctes, les unes (injecteurs 24) injectant du combustible dans la direction de la veine de comburant et les autres (injecteurs 25 et 26) injectant du combustible en oblique dans ladite veine.

16. Mât d'injection selon l'une des revendications 1 à 15,
**caractérisé en ce que** le corps (10) dudit mât comporte, du côté opposé à ladite étrave, une nervure de culot (20) longitudinale médiane saillante, **en ce que** dans ladite nervure de culot est agencée au moins une série d'injecteurs élémentaires (24) injectant du combustible dans la direction de la veine de comburant et **en ce que**, de part et d'autre de ladite nervure de culot, sont agencées au moins deux séries d'injecteurs élémentaires (25, 26) injectant du combustible en oblique dans ladite veine.

17. Mât d'injection selon l'une des revendications 1 à 16,
**caractérisé en ce que** ledit corps (10) du mât d'injection comporte à ses extrémités des têtes (6A, 6B) destinées à l'ancrage du mât dans des parois opposées (5A, 5B) dudit statoréacteur et à l'alimentation dudit mât en combustible et en fluide de refroidissement et **en ce que** ladite pièce d'étrave (11) recouvre au moins en partie lesdites têtes.

## Patentansprüche

1. Mast (6) zum Einspritzen von Treibstoff für ein Staustrahltriebwerk (1), das dazu bestimmt ist, bei einer hohen Machzahl zu arbeiten, und das eine Verbrennungskammer (8) umfasst, in die ein Strom aus einem Sauerstoffträger (F) eingeführt wird, wobei der Mast einen Vordersteven (7) umfasst, der den Strom des Sauerstoffträgers aufnimmt und eine Rampe von elementaren Einspritzdüsen für den Treibstoff bildet, die in dem Strom des Sauerstoffträgers quer zu diesem angeordnet sind und den Treibstoff in dem Strom des Sauerstoffträgers verteilen, **dadurch gekennzeichnet:**
- **dass** er umfasst:
• ein Gehäuse (10) aus Kohlenstoff-Kohlenstoff-Verbundwerkstoff, in dem die Rampe aus elementaren Einspritzdüsen angeordnet ist und das wenigstens an der Seite des Vorderstevens einen Schnitt in der Form eines Keils aufweist, wobei der Winkel sich höchstens auf 15° beläuft und der Kamm (16) auf wenigstens einem Teil seiner Länge eingeschnitten ist, um wenigstens eine Endfacette (17) zu bilden; und
• ein Stück des Vorderstevens (11), das aus einer dünnen Haut aus Kohlenstoff-Kohlenstoff-Verbundwerkstoff in der wenigstens näherungsweisen Form eines V besteht, wobei der Kamm (11A) einen Krümmungsradius (r) von höchstens 2 mm hat und der Winkel gleich demjenigen des Keils ist;
- dass die Haut in dichter Form auf dem Körper angebracht ist, wobei ihre Seiten (12, 13) gegen die Seiten (14, 15) des Keils so anliegen, dass eine dichte Kammer (18) in der Konkavität der Haut zwischen dieser und der Endfacette (17) des Körpers festgelegt wird; und
- dass in dem Körper (10) angeordnet sind:
• Mittel (23, 27) zum Einspritzen eines Kühlmittels in die dichte Kammer (18), wobei diese Mittel zum Einspritzen Düsen umfassen, die in der Facette (17) des Körpers angeordnet sind, um eine Vielzahl von Kühlmittelstrahlen hervorzurufen, die unter Druck längs der Facette verteilt werden und wenigstens in der Region ihres Kamms (11A) auf die konkave Oberfläche der Haut (11) treffen; und
• Mittel (28, 29, 30) zum Absaugen des Kühlmittels nach dem Auftreffen der Strahlen auf der konkaven Oberfläche der Haut.

2. Mast zum Einspritzen nach Anspruch 1, **dadurch gekennzeichnet, dass** die Haut aus Kohlenstoff-Kohlenstoff-Verbundwerkstoff, aus dem das Stück des Vorderstevens gebildet wird, umfasst:
- eine faserige Gewebestruktur, wobei die Schussfäden (T) auf mehrere Ebenen der Dicke (e) der Haut verteilt sind und jeder der Kettfäden (C) auf unterschiedlichen Ebenen um die Schussfäden (T) herum läuft; und
- eine Grundmasse, welche die faserige Struktur einhüllt und aus pyrolisiertem und graphitiertem Pech besteht.

3. Mast zum Einspritzen nach Anspruch 2, **dadurch gekennzeichnet, dass** der Kamm (11A) des Stücks des Vorderstevens parallel zu den Schussfäden (T) der Haut verläuft.

4. Mast zum Einspritzen nach einem der Ansprüche 1 bis 3, **dadurch gekennzeichnet, dass** die Dicke (e) der Haut höchstens 2 mm ist.

5. Mast zum Einspritzen nach einem der Ansprüche 1 bis 4, **dadurch gekennzeichnet, dass** die Wärmeleitfähigkeit des wesentlichen Kohlenstoff-Kohlenstoff Verbundwerkstoffs der Haut (11) quer zu dieser in der Größenordnung von 70 W/m/K liegt.

6. Mast zum Einspritzen nach einem der Ansprüche 1 bis 5, **dadurch gekennzeichnet, dass** der Körper (10) des Kohlenstoff-Kohlenstoff-Verbundwerkstoffs aus einer dreidimensionalen, faserigen Struktur gebildet ist, die in eine Grundmasse aus pyrolisiertem und graphitiertem Pech eingehüllt ist.

7. Mast zum Einspritzen nach einem der Ansprüche 1 bis 6, **dadurch gekennzeichnet, dass** die Haut (11) und der Körper (10) aus Kohlenstoff-Kohlenstoff-Verbundwerkstoff durch eine Klebeverbindung mittels eines Kohlenstoffklebemittels miteinander verbunden sind.

8. Mast zum Einspritzen nach Anspruch 7, **dadurch gekennzeichnet, dass** die Gesamtheit der Haut, die auf den Körper geklebt ist, gegen Oxidation geschützt ist.

9. Mast zum Einspritzen nach einem der Ansprüche 1 bis 9, **dadurch gekennzeichnet, dass** das Kühlmittel ein Gas mit niedriger Temperatur ist.

10. Mast zum Einspritzen nach einem der Ansprüche 1 bis 9 für ein Luftfahrzeug, das mit Mach 12 fliegen muss, wobei der Vordersteven des Masts einer Temperatur von etwa 1.500°C standhalten muss, **dadurch gekennzeichnet, dass**:
- die Haut (11) einen Raumwinkel (A) von 12° bildet und einen Radius (r) der Vorderkante hat, der gleich 1,5 mm ist;
- die Haut eine Dicke (e) in der Größenordnung von 1 mm hat und ihr wesentlicher Kohlenstoff-Kohlenstoff-Verbundwerkstoff eine transversale Wärmeleitfähigkeit in der Größenordnung von 70 W/m/K aufweist;
- das Kühlmittel Wasserstoff eine Temperatur von 100 K bis 300 K und einen Druck in der Größenordnung von 10 bis 15 bar hat; und
- der Durchsatz des Kühlmittels in der Größenordnung von 2 bis 5 g/s für jeden Zentimeter Länge der Vorderkante liegt.

11. Mast zum Einspritzen nach einem der Ansprüche 1 bis 10, **dadurch gekennzeichnet, dass** das Kühlmittel aus Treibstoff besteht.

12. Mast zum Einspritzen nach einem der Ansprüche 1 bis 11, **dadurch gekennzeichnet, dass** die Mittel zum Absaugen des Kühlmittels umfassen:
- wenigstens eine längs verlaufende Rille (29), die an der Oberfläche in dem Körper (10) hergestellt und durch eine Seite der Haut (11) verschlossen wird; und
- ein Netzwerk von an der Oberfläche verlaufenden Querrillen (28), welche die dichte Kammer (18) mit der längs verlaufenden Rille (29) verbinden und ebenfalls durch die Haut verschlossen werden.

13. Mast zum Einspritzen nach einem der Ansprüche 1 bis 12, **dadurch gekennzeichnet, dass** die Rampe zum Einspritzen von Treibstoff und die Mittel zum Einspritzen von Kühlmittel längs verlaufende Kanäle (21, 22, 23) zur Versorgung und quer verlaufende Kanäle (24 bis 27) zum Einspritzen umfassen, wobei diese alle in dem Körper des Masts hergestellt werden.

14. Mast zum Einspritzen nach einem der Ansprüche 1 bis 13, **dadurch gekennzeichnet, dass** die Rampe zum Einspritzen von Treibstoff an der Seite des Masts angeordnet ist, die dem Vordersteven gegenüberliegt.

15. Mast zum Einspritzen nach Anspruch 14, **dadurch gekennzeichnet, dass** die Rampe zum Einspritzen von Treibstoff unterschiedliche Reihen von elementaren Einspritzdüsen umfasst, wobei die einen (Einspritzdüsen 24) Treibstoff in der Richtung des Stroms des Sauerstoffträgers einspritzen und die anderen (Einspritzdüsen 25 und 26) Treibstoff schräg in den Strom einspritzen.

16. Mast zum Einspritzen nach einem der Ansprüche 1 bis 15, **dadurch gekennzeichnet, dass** der Körper (10) des Masts an der Seite, die dem Vordersteven gegenüberliegt, eine in der Mitte verlaufende, hervorstehende, angegossene Längsrippe (20) umfasst, und dass in der angegossenen Rippe wenigstens eine Reihe von elementaren Einspritzdüsen (24) angeordnet ist, die Treibstoff in der Richtung des Sauerstoffträgerstroms einspritzen, und dass auf beiden Seiten der angegossenen Rippe wenigstens zwei Reihen von elementaren Einspritzdüsen (25, 26) angeordnet sind, die Treibstoff schräg in den Strom einspritzen.

17. Mast zum Einspritzen nach einem der Ansprüche 1 bis 16, **dadurch gekennzeichnet, dass** der Körper (10) des Masts zum Einspritzen an seinen Enden Köpfe (6A, 6B) umfasst, die zur Verankerung des Masts in gegenüberliegenden Wänden (5A, 5B) des Staustrahltriebwerks und zur Versorgung des Masts mit Treibstoff und Kühlmittel bestimmt sind, und dass das Stück des Vorderstevens (11) wenigstens einen Teil der Köpfe abdeckt.

## Claims

1. A fuel injection stub (6) for a ramjet (1) which is designed to operate at a high Mach number and which includes a combustion chamber (8) into which an oxidizer flow (F) is introduced, said stub including a nose (7) receiving said oxidizer flow and forming a rail of elementary fuel injectors, said rail being arranged in said oxidizer flow transversely to the latter and distributing said fuel in said oxidizer flow,
**characterized:**
- **in that** it includes :
. a body (10) of carbon-carbon composite, in which said rail of elementary injectors is arranged, and which, at least on the side where said nose is located, has a cross section in the shape of a wedge, the angle of which is at most equal to 15° and the edge (16) of which is cut over at least part of its length in order to form at least one end facet (17); and
. a nose piece (11) consisting of a thin skin of carbon-carbon composite in at least approximately the shape of a dihedron, the edge (11A) of which has a radius of curvature (r) at most equal to 2 mm and the angle of which is equal to that of said wedge;
- **in that** said skin is joined to said body, in a sealed manner, with its faces (12, 13) pressed against the faces (14, 15) of said wedge so that a sealed chamber (18) is delimited, in the concavity of said skin, between the latter and said end facet (17) of said body; and
- **in that**, in said body (10), there are arranged:
. means (23, 27) for injecting a coolant into said sealed chamber (18), these injection means comprising nozzles arranged in said facet (17) of said body in order to produce a number of jets of pressurized coolant which are distributed along said facet and strike the concave face of said skin (11), at least in the region of its edge (11A); and
. means (28, 29, 30) for removing said coolant after impact of said jets against the concave face of said skin.

2. The injection stub as claimed in claim 1,
**characterized in that** said carbon-carbon composite skin, from which said nose piece is formed, comprises:
- a woven fibrous structure, the weft yarns (T) of which are distributed at several levels in the thickness (e) of said skin and each of the warp yarns (C) of which passes around weft yarns (T) at different levels; and
- a matrix which encapsulates said fibrous structure and consists of pyrolyzed and graphitized pitch.

3. The injection stub as claimed in claim 2,
**characterized in that** the edge (11A) of the nose piece is parallel with the weft yarns (T) of said skin.

4. The injection stub as claimed in one of claims 1 to 3, **characterized in that** the thickness (e) of said skin is at most equal to 2 mm.

5. The injection stub as claimed in one of claims 1 to 4, **characterized in that** the thermal conductivity of the constituent carbon-carbon composite material of said skin (11), transversely to the latter, is about 70 W/m/K.

6. The injection stub as claimed in any one of claims 1 to 5, **characterized in that** said body (10) of carbon-carbon composite material is formed from a three-dimensional fibrous structure encapsulated in a matrix of pyrolyzed and graphitized pitch.

7. The injection stub as claimed in any one of claims 1 to 6, **characterized in that** said skin (11) and said body (10) of carbon-carbon composite material are joined together by adhesive bonding by means of a carbon adhesive.

8. The injection stub as claimed in claim 7,
**characterized in that** the whole of said skin adhesively bonded to said body is protected against oxidation.

9. The injection stub as claimed in one of claims 1 to 8, **characterized in that** the coolant is a low-temperature gas.

10. The injection stub as claimed in one of claims 1 to 9, for an aircraft having to fly at Mach 12, the nose of said stub having to withstand a temperature close to 1500°C,
**characterized in that**:
- the skin (11) makes a dihedral angle (A) of 12° and has a leading-edge radius (r) equal to 1.5 mm;
- the skin has a thickness (e) of about 1 mm and its constituent carbon-carbon composite material has a transverse thermal conductivity of about 70 W/m/K;
- the coolant is hydrogen at a temperature of 100 K to 300 K and at a pressure of about 10 to 15 bar; and
- the flow rate of the coolant is about 2 to 5 g/s for each cm of length of said leading edge.

11. The injection stub as claimed in one of claims 1 to 10,
**characterized in that** the coolant consists of fuel.

12. The injection stub as claimed in one of claims 1 to 11,
**characterized in that** said means for removing the coolant include:
- at least one longitudinal groove (29) made on the surface of said body (10) and closed off by one face of said skin (11); and
- an array of transverse surface grooves (28) bringing said sealed chamber (18) into communication with said longitudinal groove (29) and also closed off by said skin.

13. The injection stub as claimed in one of claims 1 to 12,
**characterized in that** said fuel injection rail and said coolant injection means include longitudinal feed channels (21, 22, 23) and transverse injection channels (24 to 27), all these being made in said body of the stub.

14. The injection stub as claimed in one of claims 1 to 13,
**characterized in that** said fuel injection rail is arranged on that side of said stub which is opposite said nose.

15. The injection stub as claimed in claim 14,
**characterized in that** said fuel injection rail includes series of separate elementary injectors, some of them (injectors 24) injecting fuel in the direction of the oxidizer flow and the others (injectors 25 and 26) injecting fuel obliquely into said flow.

16. The injection stub as claimed in one of claims 1 to 15,
**characterized in that** the body (10) of said stub includes, on the side opposite said nose, a projecting central longitudinal base rib (20), **in that** at least one series of elementary injectors (24) injecting fuel in the direction of the oxidizer flow is arranged in said base rib and **in that** at least two series of elementary injectors (25, 26) injecting fuel obliquely into said flow are arranged on each side of said base rib.

17. The injection stub as claimed in one of claims 1 to 16,
**characterized in that** said body (10) of the injection stub includes, at its ends, heads (6A, 6B) which are designed to anchor the stub in opposite walls (5A, 5B) of said ramjet and to feed said stub with fuel and coolant and **in that** said nose piece (11) covers at least part of said heads.
